(19) Europäisches Patentamt / European Patent Office / Office européen des brevets

(11) **EP 4 693 575 A1**

(12) **EUROPEAN PATENT APPLICATION**
published in accordance with Art. 153(4) EPC

(43) Date of publication:
**11.02.2026 Bulletin 2026/07**

(21) Application number: **24781166.4**

(22) Date of filing: **25.03.2024**

(51) International Patent Classification (IPC):
**H01M 10/058** (2010.01)  **H01M 10/0565** (2010.01)
**H01M 4/13** (2010.01)  **H01M 4/62** (2006.01)
**H01M 4/66** (2006.01)  **H01M 10/052** (2010.01)
**H01M 10/42** (2006.01)

(52) Cooperative Patent Classification (CPC):
**H01M 10/052; H01M 4/622; H01M 4/661;**
**H01M 10/056; H01M 10/0565;** H01M 2300/0082

(86) International application number:
**PCT/KR2024/003732**

(87) International publication number:
**WO 2024/205175 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.03.2023 KR 20230039381
12.10.2023 KR 20230135953

(71) Applicants:
• **SAMSUNG SDI CO., LTD.**
**Yongin-si, Gyeonggi-do 17084 (KR)**
• **IUCF-HYU (Industry-University Cooperation Foundation Hanyang University)**
**Seoul 04763 (KR)**

(72) Inventors:
• **BAE, Woo Jin**
**Yongin-si, Gyeonggi-do 17084 (KR)**
• **MOON, Jong Seok**
**Yongin-si, Gyeonggi-do 17084 (KR)**

• **LEE, Kang Hee**
**Yongin-si, Gyeonggi-do 17084 (KR)**
• **WOO, Hyun Sik**
**Yongin-si, Gyeonggi-do 17084 (KR)**
• **KIM, Hee Min**
**Yongin-si, Gyeonggi-do 17084 (KR)**
• **PARK, Jong Seok**
**Yongin-si, Gyeonggi-do 17084 (KR)**
• **PARK, Jin Hwan**
**Yongin-si, Gyeonggi-do 17084 (KR)**
• **KIM, Dong Won**
**Seoul 06219 (KR)**
• **BAN, A Hyeon**
**Seoul 05112 (KR)**
• **ROH, Jin Ah**
**Seoul 03951 (KR)**
• **CHOI, Jae Kyung**
**Seoul 03093 (KR)**

(74) Representative: **Michalski Hüttermann & Partner Patentanwälte mbB**
**Kaistraße 16A**
**40221 Düsseldorf (DE)**

(54) **ELECTRODE STRUCTURE INCLUDING POLYMER ELECTROLYTE, METHOD FOR MANUFACTURING SAME, AND LITHIUM BATTERY INCLUDING SAME**

(57) Provided are an electrode structure, a method for manufacturing the electrode structure, and a lithium battery including the electrode structure. The electrode structure comprises an electrode current collector and a polymer electrolyte disposed on the electrode current collector. The electrode current collector contains nickel (Ni) or chromium (Cr). The polymer electrolyte includes a cross-linked structure, containing a repeating unit (A) derived from a first polymer and a repeating unit (B) derived from a second polymer, and a metal salt disposed inside the cross-linked structure. The first polymer includes a polymer containing a polar functional group, and the second polymer includes a polyurethane-based polymer.

# FIG. 1

## Description

### Technical Field

According to one or more embodiments, the present disclosure provides an electrode structure containing a polymer electrolyte, a method of manufacturing the electrode structure, and lithium battery including the electrode structure.

### Background Art

Lithium secondary batteries are high-performance secondary batteries having some of the highest energy densities among related art secondary batteries, and may be utilized in one or more suitable fields such as electric vehicles.

As an anode of a lithium metal battery, a lithium metal thin film is utilized. If (e.g., when) the lithium metal thin film is utilized as an anode, the reactivity with a liquid electrolyte may be relatively high due to the high reactivity of lithium during charging and discharging. Accordingly, if (e.g., when) dendrites are formed on the lithium metal thin film of the lithium anode, the lithium metal battery utilizing the lithium metal thin film may have reduced lifespan and stability. Thus, there is a need and/or desire to improve the design and method of preparing the lithium metal thin film utilized in lithium metal battery.

### Disclosure of Invention

### Technical Problem

One or more aspects of embodiments are directed toward an electrode structure including a polymer electrolyte having improved durability and lifespan characteristics.

One or more aspects of embodiments are directed toward a lithium battery including the herein-described electrode structure.

### Solution to Problem

According to one or more embodiments, an electrode structure includes an electrode current collector; and

a polymer electrolyte provided on the electrode current collector,
wherein the electrode current collector includes nickel (Ni), chromium (Cr), or zinc (Zn),
the polymer electrolyte includes a cross-linked structure and a metal salt, the cross-linked structure including a repeating unit (A) including (e.g., derived from) a first polymer and a repeating unit (B) including (e.g., derived from) a second polymer,
the first polymer includes a polymer containing a polar functional group, and
the second polymer includes a polyurethane-based polymer.

According to one or more embodiments, a method of manufacturing (e.g., preparing) the electrode structure includes: preparing an electrode current collector;

preparing a composition for providing a polymer electrolyte including a first polymer, a second polymer, a metal salt and an initiator;
applying the composition for providing a polymer electrolyte onto the electrode current collector; and
providing the polymer electrolyte on the electrode current collector to be coated with the composition for providing a polymer electrolyte,
wherein the electrode current collector includes nickel (Ni), chromium (Cr) or zinc (Zn),
the first polymer includes a polymer containing a polar functional group, and
the second polymer includes a polyurethane-based polymer.

One or more embodiments provide a lithium battery including the herein-described electrode structure.

### Advantageous Effects of Invention

The electrode structure according to one or more embodiments includes an electrode current collector and a polymer electrolyte provided on the electrode current collector, wherein the electrode current collector includes a nickel or chromium metal, the polymer electrolyte includes a metal salt, so that suppression of polymerization reactions during and/or for providing the polymer electrolyte, e.g., due to metal ions released from the electrode current collector, during the providing process of the polymer electrolyte may be prevented or reduced. Therefore, the durability and high-temperature stability of the electrode structure may be improved.

The electrode structure includes a polymer electrolyte containing a metal salt, and thus the metal salt may induce a substantially uniform electrodeposition of lithium. The electrode structure including such a polymer electrolyte may have improved lifespan characteristics.

## Brief Description of Drawings

FIG. 1 is a diagram that schematically shows an electrode structure including a polymer electrolyte according to some embodiments of the present disclosure.
FIG. 2 is a cross-sectional view of a lithium battery according to some embodiments of the present disclosure.
FIG. 3 is a cross-sectional view of a lithium battery according to some embodiments of the present disclosure.
FIG. 4 is a schematic diagram of a lithium battery according to some embodiments of the present disclosure.
FIG. 5 is a schematic diagram of a lithium battery according to some embodiments of the present disclosure.
FIG. 6 is a schematic diagram of a lithium battery according to some embodiments of the present disclosure.

## Mode for the Invention

Hereinafter, an electrode structure including a polymer electrolyte according to embodiments, a method of manufacturing the electrode structure, and a lithium battery including the electrode structure will be described in more detail. These embodiments are merely presented as examples to explain the present disclosure in more detail, and it will be apparent to those skilled in the art that the scope of the present disclosure is not limited by these embodiments.

Unless otherwise defined, all chemical, technical, and scientific terms utilized in this specification have the same meaning as commonly understood by a person skilled in the art to which the present disclosure pertains. In the event of a conflict, this specification including definitions will prevail.

Although methods and materials similar or equivalent to those described herein may be utilized in examples or evaluations of the present disclosure, suitable methods and materials are described herein. As utilized herein, the singular forms are intended to include the plural forms as well, unless the context clearly indicates otherwise.

As utilized herein, the terms "comprise," "comprising," "comprises," "include," "includes," "including," "have," "having," and/or "has," and/or the like if (e.g., when) utilized in this specification, may specify the presence of stated features, integers, steps, operations, elements, components, ingredients, materials, or combinations thereof, but do not preclude the presence or addition of one or more other features, integers, steps, operations, elements, components, ingredients, materials, or combinations thereof.

As utilized herein, the term "a combination thereof" may refer to a mixture or combination of one or more of the listed elements. As utilized herein, "/" may be interpreted as "and", or as "or" depending on the context.

As utilized herein, the term "and/or" may be meant to include any and all combinations of one or more items listed. As utilized herein, the term "or" may refer to "and/or". In this specification, the expression "at least one type or kind", "one or more types (kinds)", or "one or more" in front of the components may refer to that the entire list of components may be supplemented, but may not refer to that the individual components of the preceding description may be not supplemented.

In the drawings, the thicknesses of layers and regions may be exaggerated for clarity of description. Like drawing reference numerals are utilized for like elements through the specification. Throughout the specification, if (e.g., when) a component, such as a layer, a film, a region, or a plate, is described as being "above" or "on" another component, the component may be directly above the another component, or there may be yet another component therebetween. It will be understood that although the terms "first," "second," and/or the like may be utilized herein to describe one or more suitable elements, these elements should not be limited by these terms. These terms are only utilized to distinguish one element from another element.

As utilized herein, a "metal" refers to both (e.g., simultaneously) metals and metalloids such as silicon and germanium in an elemental or ionic state.

As utilized herein, an "alloy" refers to a mixture of two or more metals.

As utilized herein, a "cathode active material refers to a cathode material capable of undergoing lithiation and delithiation.

As utilized herein, an "anode active material" refers to an anode material capable of undergoing lithiation and delithiation.

As utilized herein, the terms "lithiation" and "to lithiate" refer to a process of adding lithium to a cathode active material or an anode active material.

As utilized herein, the terms "delithiation" and "to delithiate" refer to a process of removing lithium from a cathode active material or an anode active material.

As utilized herein, "charging" and "charge" refer to a process of providing electrochemical energy to a battery.

As utilized herein, "discharging" and "discharge" refer to a process of removing electrochemical energy from a battery.

As utilized herein, a "positive electrode" and a "cathode" refer to an electrode where electrochemical reduction and lithiation occur during a discharging process.

As utilized herein, a "negative electrode" and an "anode" refer to an electrode where electrochemical oxidation and delithiation occur during a discharging process.

A polymer electrolyte according to embodiments and a lithium battery including the same will be described in more detail with reference to the attached drawings.

[Electrode structure]

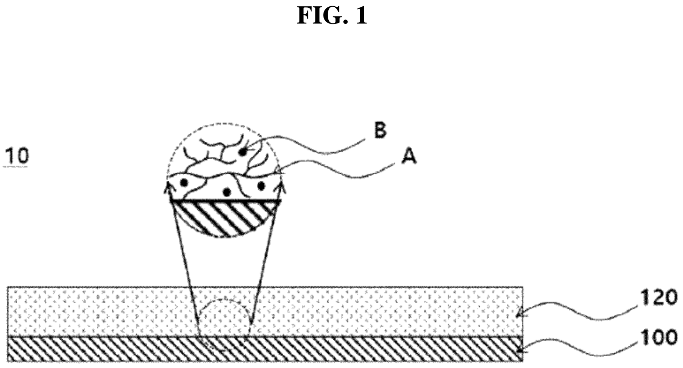

FIG. 1 schematically shows an electrode structure including a polymer electrolyte according to embodiments.

Referring to FIG. 1, the electrode structure 10 may include an electrode current collector 110 and a polymer electrolyte 120 provided on the electrode current collector 110, wherein the electrode current collector 110 may include at least one of nickel (Ni), chromium (Cr), or zinc (Zn). The polymer electrolyte 120 may include a cross-linked structure including a repeating unit (A) including (e.g., derived from) a first polymer and a repeating unit (B) including (e.g., derived from) a second polymer. The polymer electrolyte 120 may include a metal salt provided within the cross-linked structure. The first polymer may include a polymer including (e.g., containing) a polar functional group, and the second polymer may include a polyurethane-based polymer. In some embodiments, the electrode structure 10 may include a polymer electrolyte including the metal salt, and the metal salt may include a metal having high lithiophilicity. In this case, the metal salt may function as a nucleation site of lithium during charging and discharging, so that the lithium metal may be more uniformly electrodeposited on the electrode current collector 110 due to the metal salt included in the polymer electrolyte 120. In some embodiments, if (e.g., when) the polymer electrolyte 120 includes the metal salt, during the preparing process of the electrode structure 10, a metal with relatively high ionization in the electrode current collector 110 may be leaked into an inside of the polymer electrolyte in an ion state. In this case, if (e.g., when) the electrolyte structure 10 includes copper (Cu), $Cu^{2+}$ may be leaked, and $Cu^{2+}$ may function as a radical scavenger, thereby quenching a polymerization reaction of polymers included in the polymer electrolyte, and thus durability of the polymer electrolyte 120 may be reduced. However, as described herein, the electrode current collector 110 may include nickel (Ni), chromium (Cr) or zinc (Zn) instead of copper, and thus polymerization reaction of the polymers included in the polymer electrolyte may be more easily performed. Therefore, the polymer electrolyte 120 may have improved durability and adhesion to the electrode current collector 110.

[Electrode structure: Electrode current collector]

According to some embodiments, a surface of the electrode current collector 110 may include nickel (Ni), chromium (Cr) or zinc (Zn) and include no (e.g., may exclude) copper (Cu). In this case, in the preparing process of the electrode structure 10, the polymer electrolyte 120 may include no (e.g., may exclude) copper ion $Cu^{2+}$). As a result, the polymerization or cross-linked reaction of the first polymer and the second polymer may be easily performed while an inhibitory effect of the polymerization reaction of the first polymer and the second polymer due to copper ions ($Cu^{2+}$) may be effectively prevented or reduced.

According to some embodiments, the electrode current collector 110 may include a base film and a metal layer provided on at least one side (e.g., one side or both (e.g., opposite) sides of the base film. In some embodiments, the base film may include a metal or a polymer, and the metal in the base film may include indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof. The polymer in the base film may include polyethylene terephthalate (PET), polyethylene (PE), polypropylene (PP), polybutylene terephthalate (PBT), polyimide (PI), or a combination thereof. The metal layer may include nickel (Ni), chromium (Cr) or zinc (Zn). According to other embodiments, the electrode current collector 110 may include (e.g., be formed utilizing) nickel (Ni), chromium (Cr) or zinc (Zn).

In some embodiments, if (e.g., when) the base film includes a polymer, the polymer may be a thermoplastic polymer. Examples of the polymer may include polyethylene terephthalate (PET), polyethylene (PE), polypropylene (PP), polybutylene terephthalate (PBT), polyimide (PI), or a combination thereof. Due to the inclusion of a thermoplastic polymer in the base film, the base film may be melted in the event of a short circuit and thus may prevent or reduce a rapid increase in electric current. The base film may be, for example, an insulator.

In some embodiments, if (e.g., when) the base film includes a metal, the metal may include indium(In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

In some embodiments, the metal layer may include nickel (Ni), chromium (Cr), or zinc(Zn). In embodiments, the metal layer may include nickel (Ni), chromium (Cr), or zinc(Zn), and include no (e.g., may exclude) copper (Cu). The metal layer may be disconnected in the event of an overcurrent, thereby acting as an electrochemical fuse, and therefore providing a protection against short circuits. Limiting current and peak current may be controlled or selected by controlling of a thickness of the metal layer. The metal layer may be plated or deposited on the base film.

In some embodiments, as the thickness of the metal substrate layer decreases, the limiting current and/or peak current of the electrode current collector 110 may also decrease, and therefore, the lithium battery may have improved stability during a short circuit. A lead tab may be added on the metal layer for external connection. The lead tab may be welded to the metal layer or a metal layer/base film laminate by ultrasonic welding, laser welding, spot welding, and/or the like. As the base film and/or the metal substrate layer melt during welding, the metal layer may be electrically connected to the lead tab. To further secure the welding between the metal substrate layer and the lead tab, a metal chip may be further added between the metal layer and the lead tab. The metal chip may be a flake of the same material as the metal of the metal layer. For example, the metal chip may be a metal foil, a metal mesh, and/or the like. For example, the metal chip may be an aluminum foil, a copper foil, an SUS foil, and/or the like. By welding the lead tab after placing the metal chip on the metal layer, the lead tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead tab. A metal chip and/or a lead tab may be further added to a portion of the metal layer.

For example, the base film may have a thickness of about 1 micrometer ($\mu$m) to about 50 $\mu$m, about 1.5 $\mu$m to about 50 $\mu$m, about 1.5 $\mu$m to about 40 $\mu$m, or about 1 $\mu$m to about 30 $\mu$m. If (e.g., when) the base film has a thickness within the described range, a reduction in the weight of the electrode assembly may be more effectively achieved. For example, the base film may have a melting point of about 100 °C to about 300 °C, about 100 °C to about 250 °C, or about 100 °C to about 200 °C. As the base film has a melting point within the described ranges, during the welding process of the lead tab, the base film may melt and be easily bonded to the lead tab. To improve the adhesion between the base film and the metal layer, a surface treatment such as the corona treatment may be performed on the base film. The metal layer may have a thickness of, for example, about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If (e.g., when) the thickness of the metal layer falls within the described range, the stability of the anode may be secured while maintaining conductivity. The metal chip may have, for example, a thickness of about 2 $\mu$m to about 10 $\mu$m, about 2 $\mu$m to about 7 $\mu$m, or about 4 $\mu$m to about 6 $\mu$m. If (e.g., when) the thickness of the metal chip falls within the described range, the metal layer and the lead tab may be more easily connected. A weight of the electrode may be reduced and as a result, energy density may be improved because the electrode current collector 110 has such a structure.

For example, the electrode current collector 110 may be in the form selected from among a sheet, a foil, a film, a plate, a porous structure, a mesoporous structure, a through-hole-containing structure, a polygonal ring structure, a mesh structure, a foam structure, and a non-woven fabric structure, but is not limited thereto, and any form available in the art may be utilized.

For example, the electrode current collector 110 may have a reduced thickness compared to a comparable electrode current collector. Therefore, the electrode according to some embodiments of the present disclosure includes, for example, a thin film current collector, thereby being distinct from a comparable electrode including the thick current collector. In the electrode including the thin current collector, the electrode active material layer may have a relatively increased thickness because the electrode according to some embodiments of the present disclosure includes the thin current collector having the reduced thickness. In this regard, energy density of the lithium battery utilizing such an electrode may increase. The electrode current collector 110 may have a thickness of, for example, 15 $\mu$m or less, 14.5 $\mu$m or less, or 14 $\mu$m or less. The electrode current collector 110 may have a thickness of, for example, 0.1 $\mu$m or more and less than 15 $\mu$m, about 1 um to about 14.5 $\mu$m, about 2 $\mu$m to about 14 um, about 3 $\mu$m to about 14 $\mu$m, about 5 $\mu$m to about 14 $\mu$m, or about 10 $\mu$m to about 14 $\mu$m.

[Electrode structure: Polymer electrolyte]

The polymer electrolyte 120 may include a cross-linked structure and a metal salt, the cross-linked structure including a repeating unit (A) including (e.g., derived from) the first polymer and a repeating unit (B) including (e.g., derived from) the second polymer. In this case, the metal salt may be provided inside the cross-linked structure.

For example, the cross-linked structure may be a structure in which the first polymer and the second polymer included in the polymer electrolyte 120 may be cross-linked, e.g., to thereby form a cross-linked network. For example, the first polymer may include a polymer including a polar functional group, and lithium ions may move along the polymer (of the first polymer) including the polar functional group in the polymer electrolyte 120. For example, the second polymer may be polyurethane-based and may impart elastic characteristics to the polymer electrolyte 120.

According to some embodiments, the polymer including the polar functional group included in the first polymer may contain polyethylene oxide, polyacrylonitrile, a polyvinylidene fluoride-hexafluoropropylene copolymer, or a (e.g., any) combination thereof.

According to some embodiments, the first polymer may further include at least one (e.g., one or more) terminal double bonds. For example, the first polymer may further include two or more terminal double bonds. For example, the one or more terminal double bonds may include an ally group, an acryl group, or a vinyl group. For example, the one or more terminal double bonds may include an acryl group. In embodiments, if (e.g., when) the first polymer further includes at least one terminal double bond, the first polymer, as a cross-linking agent, may easily form a cross-linked network between the first polymer and/or the second polymer. In this regard, the cross-linked structure including the repeating unit (A) derived from (e.g., including) the first polymer may have more improved durability.

According to some embodiments, the first polymer may include polyethylene oxide, polyacrylonitrile, a polyvinylidene fluoride-hexafluoropropylene copolymer, polyethylene glycol diacrylate, polyethylene glycol methyl ether acrylate, polymethyl methacrylate, polyethyl methacrylate, polycaprolactone, polyethylene carbonate, polypropylene carbonate, or a (e.g., any) combination thereof.

According to some embodiments, the second polymer may include polyurethane, urethane acrylate, urethane methacrylate, perfluoropolyether urethane acrylate, perfluoropolyether urethane methacrylate, or a (e.g., any) combination thereof.

According to some embodiments, an amount of the repeating unit (A) derived from the first polymer in the cross-linked structure may be about 50 wt% to about 90 wt% with respect to a total weight of the cross-linked structure, and an amount of the repeating unit (B) derived from the second polymer may be about 10 wt% to about 50 wt% with respect to the total weight of the cross-linked structure. For example, the amount of the repeating unit (A) derived from the first polymer in the cross-linked structure may be about 60 wt% to about 90 wt%, about 70 wt% to about 90 wt%, about 50 wt% to about 80 wt%, or about 60 wt% to about 80 wt % with respect to the total weight of the cross-linked structure. For example, the amount of the repeating unit (B) derived from the second polymer may be about 10 wt% to about 40 wt%, about 10 wt% to about 30 wt%, about 20 wt% to about 50 wt%, or about 20 wt% to about 30 wt% with respect to the total weight of the cross-linked structure.

The metal salt may include a metal salt having lithiophilicity. In embodiments, the metal salt having lithiophilicity may include a metal having lithiophilicity. For example, the metal salt includes the metal salt having lithiophilicity, and thus in the lithium metal including the electrode structure 10 containing the polymer electrolyte 120, lithium may be more uniformly electrodeposited due to the metal salt included in the polymer electrolyte 120 during charging and discharging. For example, metal ions included in the metal salt having lithiophilicity, and lithium ions may form an alloy during charging and discharging, and the formed alloy may act as a nucleation site, thereby inducing substantially uniform electrodeposition of lithium.

According to some embodiments, the metal salt may include gold (Au), silver (Ag), platinum (Pt), zinc (Zn), silicon (Si), and magnesium (Mg), or any combination thereof. In embodiments, the metal having lithiophilicity may include gold (Au), silver (Ag), platinum (Pt), zinc (Zn), silicon (Si), and magnesium (Mg), or a (e.g., any) combination thereof. For example, the metal salt may include silver (Ag). In embodiments, if (e.g., when) the metal salt includes silver (Ag), silver (Ag) and lithium may form an alloy of Li-Ag during charging and discharging, the formed Li-Ag alloy may act as a nucleation site and thus substantially uniform electrodeposition of lithium may be induced.

According to embodiments, the metal salt may include $AgNO_3$, $AuCl_3$, $Mg(NO_3)_2$, $Zn(NO_3)_2$, and/or the like

According to some embodiments, an amount of the metal salt may be about 1 part by weight to about 50 parts by weight with respect to 100 parts by weight of the cross-linked structure. For example, the amount of the metal salt may be about 1 part by weight to about 40 parts by weight, about 1 part by weight to about 30 parts by weight, about 1 part by weight to about 20 parts by weight, about 5 parts by weight to about 50 parts by weight, or about 5 parts by weight to about 20 parts by weight with respect to 100 parts by weight of the cross-linked structure.

The polymer electrolyte according to embodiments may further include a lithium salt. An amount of the lithium salt may be about 20 parts by weight to about 100 parts by weight with respect to 100 parts by weight of the cross-linked structure. In embodiments, if (e.g., when) the polymer electrolyte includes a lithium salt, the polymer electrolyte may be a polymer solid electrolyte including a lithium salt. For example, if (e.g., when) the polymer electrolyte includes a lithium salt and an organic solvent, the polymer electrolyte may be a polymer gel electrolyte including a liquid electrolyte containing a lithium salt.

The polymer solid electrolyte may include, for example, a lithium salt and the herein-described cross-linked structure. The polymer solid electrolyte may be, for example, a polymer electrolyte including no liquid electrolyte.

According to some embodiments, the polymer solid electrolyte may further include a third polymer in addition to the herein-described cross-linked structure. For example, the third polymer may be polyethylene oxide (PEO), polyvinylidene fluoride (PVDF), vinylidene fluoride-hexafluoropropylene (PVDF-HFP), a poly(styrene-b-ethylene oxide) block copolymer (PS-PEO), poly( styrenebutadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi$^+$), or a (e.g., any) combination thereof, but is not limited thereto, and any polymer electrolyte available in the art may be utilized.

For example, any lithium salt available in the art as a lithium salt may be utilized. The lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ wherein x and y are each 1 to 20, LiCl, LiI, and/or a mixture thereof.

According to some embodiments, the polymer electrolyte may further include a liquid electrolyte. For example, the polymer electrolyte may be a gel polymer electrolyte including the herein-described cross-linked structure and a liquid electrolyte. For example, the liquid electrolyte may be provided within the cross-linked network formed by the cross-linked structure.

According to some embodiments, the liquid electrolyte may include an organic solvent or an ionic liquid. For example, the liquid electrolyte may further include a lithium salt. For example, the liquid electrolyte may be an ionic liquid, an organic solvent, a mixture of a lithium salt and an organic solvent, a mixture of an ionic liquid and an organic solvent, and/or a mixture of a lithium salt, an ionic liquid, and an organic solvent.

According to some embodiments, for the organic solvent, any organic solvent available in the art may be utilized. Examples of the organic solvent may include, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and/or a mixture thereof.

For example, the ionic liquid refers to a salt that may be in a liquid state at room temperature or an ambient temperature molten salt, which has a melting point of room temperature or lower and is composed solely of ions. The ionic liquid may include, for example, at least one selected from among compounds including: a) at least one cation selected from among ammonium-based cation, pyrrolidinium-based cation, pyridinium-based cation, pyrimidine-based cation, imidazolium-based cation, piperidinium-based cation, pyrazolium-based cation, oxazolium-based cation, pyridazinium-based cation, phosphonium-based cation, sulfonium-based cation, triazolium-based cation, and a mixture thereof; and b) one or more selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, Cl$^-$, Br$^-$, I$^-$, BF4-, $SO_4^{2-}$, $CF_3SO_3^-$, $(FSO_2)_2N^-$, $(C_2F_5SO_2)2N^-$, $(C_2F_5SO_2)(CF_3SO_2)N^-$, and $(CF_3SO_2)_2N^-$.

For example, a gel polymer electrolyte may be formed by impregnating the polymer solid electrolyte with an electrolyte in the lithium battery. The gel polymer electrolyte may further include an inorganic particle.

According to some embodiments, the polymer electrolyte may further include a solid electrolyte.

The solid electrolyte may be an oxide-based solid electrolyte, a sulfide-based solid electrolyte, or a combination thereof.

The solid-state electrolyte may be, for example, an oxide-based solid-state electrolyte. The oxide-based solid electrolyte may be at least one selected from among $Li_{1+x+y}Al_xTi_{2-x}Si_yP_{3-y}O_{12}$ (0<x<2, 0≤y<3), $BaTiO_3$, $Pb(Zr,Ti)O_3(PZT)$, $Pb_{1-x}La_xZr_{1-y}Ti_yO_3(PLZT)$ (O≤x<1, O≤y<1), $PB(Mg_3Nb_{2/3})O_3-PbTiO_3(PMN-PT)$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2, 0<y<3), $Li_xAl_yTi_z(PO_4)_3$ (0<x<2, 0<y<1, 0<z<3), $Li_{1+x+y}(Al, Ga)_x(Ti, Ge)_{2-x}Si_yP_{3-y}O_{12}$ (0≤x≤1 0≤y≤1), $Li_xLa_yTiO_3$ (0<x<2, 0<y<3), $Li_2O$, LiOH, $Li_2CO_3$, $LiAlO_2$, $Li_2O-Al_2O_3-SiO_2-P_2O_5-TiO_2-GeO_2$, and $Li_{3+x}La_3M_2O_{12}$ (M = Te, Nb, or Zr, and x may be an integer of 1 to 10). The solid-state electrolyte may be prepared by a sintering method and/or the like. For example, the oxide-based solid electrolyte may be a garnet-type or kind solid electrolyte selected from among $Li_7La_3Zr_2O_{12}(LLZO)$ and $Li_{3+x}La_3Zr_{2-a}M_aO_{12}$ (M-doped LLZO, M=Ga, W, Nb, Ta, or Al, and x is an integer of 1 to 10).

Examples of the sulfide-based solid electrolyte may include lithium sulfide, silicon sulfide, phosphorus sulfide, boron sulfide, or a (e.g., any) combination (e.g., one or more combinations) thereof. Sulfide-based solid electrolyte particles may include $Li_2S$, $P_2S_5$, $SiS_2$, $GeS_2$, $B_2S_3$, or (e.g., any) a combination thereof. The sulfide-based solid electrolyte particles may be $Li_2S$ or $P_2S_5$. The sulfide-based solid electrolyte particles are suitable to have a higher lithium-ion conductivity than that of other inorganic compounds. For example, the sulfide-based solid electrolyte may include $Li_2S$ and $P_2S_5$. If (e.g., when) sulfide solid electrolyte materials constituting the sulfide-based solid electrolyte include $Li_2S-P_2S_5$, a mixing molar ratio of $Li_2S$ and $P_2S_5$ may be, for example, in a range of about 50:50 to about 90:10. An inorganic solid electrolyte prepared by adding a material such as $Li_3PO_4$, halogen, a halogen compound, $Li_{2+2x}Zn_{1??x}GeO_4$ ("LISICON", 0<x<1), $Li_{3+y}PO_{4-x}N_x$ ("LIPON", 0<x<4 and 0<y<3), $Li_{3.25}Ge_{0.25}P_{0.75}S_4$ ("Thio-LISICON"), and $Li_2O-Al_2O_3-TiO_2-P_2O_5$ ("LATP") to an inorganic solid electrolyte of $Li_2S-P_2S_5$, $SiS_2$, $GeS_2$, $B_2S_3$, or a combination thereof, may be utilized as a sulfide solid electrolyte. Non-limiting examples of the sulfide solid electrolyte materials may include $Li_2S$-$P_2S_5$; $Li_2S$-$P_2S_5$-LiX (X= a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$ (0<m<10, 0<n<10, Z=Ge, Zn, or Ga); $Li_2S$-$GeS_2$; $Li_2S$-$SiS_2$-$Li_3PO_4$; and/or $Li_2S$-$SiS_2$-$Li_pMO_q$ (0<p<10, 0<q<10, and M=P, Si, Ge, B, Al, Ga, or In). In this regard, the sulfide-based solid electrolyte material may be prepared by subjecting a starting material (e.g., $Li_2S$, $P_2S_5$, and/or the like) of the sulfide-based solid electrolyte material to a treatment such as melt quenching, mechanical milling, and/or the like. In some embodiments, a calcination process may be performed following the described treatment. The sulfide-based solid electrolyte may be amorphous or crystalline or may be in a mixed state thereof.

According to some embodiments, the polymer electrolyte 120 may have a thickness of about 4 μm to about 20 μm.

According to some embodiments, the polymer electrolyte may be utilized as a polymer electrolyte of a lithium battery. For example, the lithium battery may be an anodeless (e.g., anode-free) lithium metal battery.

For example, the lithium battery may included in any (e.g., all) of a lithium-air battery, a lithium-ion battery, a lithium polymer battery, a lithium-sulfur battery, and/or the like, which utilize a lithium electrode.

The polymer electrolyte 120 according to embodiments may be utilized as a protective film or an electrolyte of the electrode current collector 110. The polymer electrolyte may have excellent or suitable interfacial characteristics and high lithium transfer constant, and thus lithium-ion conductivity may be excellent or suitable.

According to some embodiments, the electrode structure 10 may further include an interlayer provided between the electrode current collector 110 and the polymer electrolytes 120.

According to some embodiments, the interlayer may be directly provided on at least one (e.g., one side or both (e.g., opposite) sides of the electrode current collector 110. Therefore, no intervening layer may be provided between the electrode current collector 110 and the interlayer. The interlayer (not illustrated) is provided on one side or both (e.g., opposite) sides of the electrode current collector 110, and thus adhesion between the electrode current collector 110 and the polymer electrolyte 120 may be further improved.

The interlayer may have a thickness of, for example, 30 % or less of the thickness of the anode current collector 110. The interlayer (not illustrated) may have a thickness of, for example, about 0.01 % to about 30 %, about 0.1 % to about 30 %, about 0.5 % to about 30 %, about 1 % to about 25 %, about 1 % to about 20 %, about 1 % to about 15 %, about 1 % to about 10 %, about 1 % to about 5 %, or about 1 % to about 3 %. The interlayer (not illustrated) may have a thickness of, for example, about 10 nm to about 5 μm, about 50 nm to about 5 μm, about 200 nm to about 4 μm, about 500 nm to about 3 μm, about 500 nm to about 2 μm, about 500 nm to about 1.5 μm, or about 700 nm to about 1.3 μm. If (e.g., when) the interlayer has a thickness in these ranges, adhesion between the electrode current collector 110 and the polymer electrolyte 120 may further increase, and an increase in interfacial resistance may be suppressed or reduced.

For example, the interlayer may include a binder. If (e.g., when) the interlayer includes a binder, adhesion between the electrode current collector 110 and the polymer electrolyte 120 may be further improved. The binder included in the interlayer may be, for example, a conductive binder or a non-conductive binder.

The conductive binder may be, for example, an ionically conductive binder, and/or an electronically conductive binder. The binder having both (e.g., simultaneously) ionically conductive and electronically conductive properties may be classified as both (e.g., simultaneously) an ionically (e.g., ion) conductive binder and an electronically (e.g., electron) conductive binder.

The ionically conductive binder may be, for example, polystyrene sulfonate (PSS), a polyvinylidene fluoride-hexafluoropropylene (PVDF-HFP) copolymer, polyvinyl fluoride (PVF), polyvinylidene fluoride (PVDF), poly(methylmethacrylate) (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPY), polyacrylonitrile (PAN), polyaniline, and polyacetylene, and/or the like The ionically conductive binder may include a polar functional group. The ionically conductive binder including the polar functional group may be, for example, Nafion, Aquivion, Flemion, Gore, Aciphex, Morgane ADP, sulfonated poly(ether ether ketone (SPEEK), sulfonated poly(arylene ether ketone ketone sulfone (SPAEKKS), sulfonated poly(aryl ether ketone (SPAEK), poly[bis (benzimidazobenzisoquinolinones)] (SPBIBI), poly(styrene sulfonate) (PSS), lithium 9,10-diphenylanthracene-2-sulfonate (DPASLi+), and/or the like The electronically conductive binder may be, for example, polyacetylene, polythiophene, polypyrrole, poly(p-phenylene), poly(phenylenevinylene), poly(phenylenesulfide), polyaniline, and/or the like The interlayer may be, for example, a conductive layer including a conductive polymer.

The binder included in the interlayer may be, for example, a fluorine-based binder. The fluorine-based binder included in the interlayer may be, for example, a polyvinylidene fluoride (PVDF). The interlayer may be provided on the anode current collector 210, for example, by a dry method or a wet method. The interlayer may be, for example, a binding layer including a binder.

The interlayer may additionally include, for example, a carbonaceous conductive material. The interlayer may be, for example, a conductive layer because of inclusion of the carbonaceous conductive material. The interlayer may be, for example, a conductive layer including a binder and a carbonaceous conductive material.

The interlayer may be provided on the electrode current collector 110 in a dry manner for example, by a deposition such as CVD, or PVD. The interlayer may be provided on the electrode current collector 110 in a wet manner by a spin coating, a dip coating, and/or the like The interlayer may be provided on the electrode current collector 110, for example, by depositing, a carbonaceous conductive material on the electrode current collector 110. The dry-coated interlayer may be formed of a carbonaceous conductive material and include no binder. In other embodiments, the interlayer may be provided on the electrode current collector 110 by, for example, applying and drying a composition including the carbonaceous conductive material, a binder, and a solvent onto the surface of the anode current collector. The interlayer may be a multilayer structure including a single layered structure or a plurality of layers.

Method of preparing electrode structure 10

A method of preparing the electrode structure 10 according to embodiments will be described.

The method of preparing the electrode structure 10 according to embodiments includes: preparing an electrode current collector 110; preparing a composition for providing a polymer electrolyte including a first polymer, a second polymer, a metal salt, and an initiator; applying the composition for providing a polymer electrolyte onto the electrode current collector 110; and providing the electrode structure 10 including the polymer electrolyte 120 on the electrode current collector 110 coated with the composition for providing the polymer electrolyte. For example, the electrode current collector 110 may include nickel (Ni), chromium (Cr) or zinc(Zn), the first polymer may include a polymer containing a polar functional group, and the second polymer may include a polyurethane-based polymer.

For example, even though the composition for providing a polymer electrolyte including the metal salt is applied onto the electrode current collector 110, a radical scavenger (for example, $Cu^{2+}$) may not be formed (e.g., may be excluded from) on the electrode current collector 110 because the current collector 110 includes nickel (Ni), chromium (Cr) or zinc (Zn). Therefore, the polymerization reaction of the first polymer and the second polymer included in the composition for providing the polymer electrolyte may be easily performed, thus the polymer electrolyte 120 may be more easily formed, adhesion between the polymer electrolyte 120 and the electrode current collector 110 may be further improved, and thus durability of the electrode current collector 110 may be further improved. The polymer electrolyte 120 includes a metal salt, and thus lithium may be more uniformly electrodeposited on the electrode current collector 110.

For example, the descriptions of the electrode collector 110, the first polymer, the second polymer, the metal salt, and the polymer electrolyte 120, may be referred to in the herein-described descriptions.

According to some embodiments, the composition for providing the polymer electrolyte may include the first polymer, the second polymer, the metal salt, and the initiator, and the polymer electrolyte may be formed from the composition for providing the polymer electrolyte. For example, the polymer electrolyte may be formed through the polymerization reaction of the first polymer and the second polymer included in the composition for providing the polymer electrolyte.

The polymerization reaction may be carried out by heating or irradiating light such as UV. Herein, heat and light may be applied to the lithium metal electrode as long as it does not have a negative effect. For example, the polymerization reaction may be processed by applying heat.

The polymerization reaction may be a copolymerization, cross-linking, or graft reaction.

If (e.g., when) the electrode current collector 110 is heated or irradiated with light such as UV to perform the polymerization reaction, heat or light may be applied electrode as long as it does not negatively affect the electrode current collector 110.

According to other embodiments, the polymerization reaction of the first polymer and the second polymer may be also performed by irradiating light at room temperature (25 °C). In the cross-linking reaction due to light irradiation, a photopolymerization initiator may be utilized. As the photopolymerization initiators, any compound as long as it is a compound that may form radicals by light such as ultraviolet rays may be utilized without limitation in composition. As the photopolymerization initiator, for example, at least one selected from the group consisting of 2-hydroxy-2-methylpropiophenone (HMPP), benzoin ether, dialkyl acetophenone, hydroxyl alkylketone, phenyl glyoxylate, benzyl dimethyl ketal, acyl phosphine, and $\alpha$-aminoketone may be utilized. As the acyl phosphine, for example, 2,4,6-trimethyl-benzoyl-trimethyl phosphine oxide may be utilized.

According to other embodiments, the polymerization reaction of the first polymer and the second polymer may be performed by heating the composition for providing the polymer electrolyte. In the cross-linking reaction by applying heat, a thermal initiator may be utilized. As the thermal initiator, any compound as long as capable of providing radicals by heat may be utilized without limitation in composition.

As the thermal initiator, at least one selected from the group consisting of a persulfate-based initiator, an azo-based initiator, a peroxide-based initiator, and ascorbic acid may be utilized. In embodiments, examples of the persulfate-based initiator may include sodium persulfate; $Na_2S_2O8$), potassium persulfate ($K_2S_2O8$), ammonium persulfa-te;$(NH_4)_2S_2O_8$), and/or the like, examples of the azo-based initiator may include 2, 2-azobis(2-amidinopropane) dihydrochloride, 2,2-azobis-(N, N-dimethylene)isobutyramidine dihydrochloride), 2-(carbamoylazo)isobutylonitril, 2,2-azobis[2-(2-imidazolin-2-yl)propane] dihydrochloride, 4,4-azobis-(4-cyanovaleric acid), and/or the like, and examples of the peroxide-based initiator may include t-butyl peroxide, dicumyl peroxide, and t-amyl peroxide, and/or the like.

According to some embodiments, in the providing of the polymer electrolyte on the electrode current collector, the composition for providing the polymer electrolyte, which is applied onto the electrode current collector, may be heated for about 1 hour to about 15 hours at about 60 °C to about 180 °C and may be vacuum dried. For example, the heating of the electrode current collector, on which the composition for providing the polymer electrolyte is applied, may be performed for about 1 hour to about 12 hours, about 1 hour to about 10 hours, about 2 hours to about 15 hours, about 4 hours to about 15 hours, or about 4 hours to about 12 hours. For example, the heating of the electrode current collector, on which the composition for providing the polymer electrolyte is applied, may be performed at about 80 °C to about 180 °C, about 100 °C to about 180 °C, about 60 °C to about 160 °C, about 60 °C to about 140 °C, or about 80 °C to about 140 °C.

According to some embodiments, the composition for providing the polymer electrolyte may further include the herein-described lithium salt.

According to some embodiments, the composition for providing the polymer electrolyte may further include the herein-described organic solvent. For example, if (e.g., when) the composition for providing the polymer further includes the organic solvent, a gel polymer electrolyte including the organic solvent may be formed from the composition for providing the polymer. For example, the composition for providing the polymer may further include the herein-described liquid electrolyte.

The descriptions of the lithium salt, the organic solvent, and the liquid electrolyte may be referred to in the herein-described descriptions.

[Lithium battery]

A lithium battery according to embodiments may include the herein-described electrode structure. Improved capacity and excellent or suitable lifespan characteristics at room temperature and high temperature may be concurrently (e.g., simultaneously) provided by including the herein-described electrode structure.

The lithium battery may be, for example, a lithium primary battery, a lithium secondary battery, a lithium-sulfur battery, a lithium-air battery, and/or the like, but is not limited thereto, and may be any lithium battery available in the art.

The lithium battery may be manufactured by the following example method, but embodiments of the present disclosure are not limited thereto and the method may be adjusted depending on required conditions.

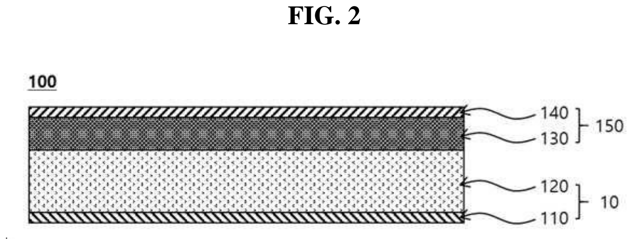

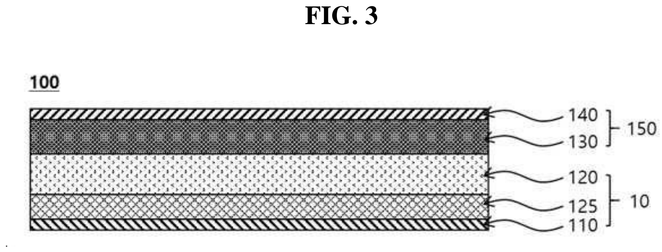

Referring to FIG. 2 and FIG. 3, the lithium battery 100 according to embodiments will be described in more detail. FIG. 3 shows a state in which a lithium metal layer 125 has been deposited and the lithium battery in FIG. 2 is charged.

The lithium battery 100 according to embodiments may include the herein-described electrode structure 10. For example, the lithium battery 100 may include the herein-described electrode structure 10 and a cathode provided on the electrode structure 10.

According to some embodiments, the polymer electrolyte 120 included in the lithium battery 100 may be in a solid, liquid, or gel form.

The lithium battery 100 according to embodiments may include, as shown in FIG. 2, an anode current collector 110; an electrode structure 10 including a polymer electrolyte 120 provided on the anode current collector 110; and a cathode 150 provided on a polymer electrolyte 120. In this case, the anode may include an anode current collector 110 free of an anode active material layer, and the cathode 150 may include a cathode current collector 140 and a cathode active material layer 130 provided on the cathode current collector 140.

The lithium battery 100 according to embodiments may further include, as shown in FIG. 3, a lithium metal layer 125 formed between the anode current collector 110 and the polymer electrolyte 120. For example, the lithium metal layer 125 may be formed during charging of the lithium battery 100. In some embodiments, the lithium metal layer may be a lithium alloy formed by the reaction of lithium ions included in the polymer electrolyte 120 and metal cations included in a metal salt included in the polymer electrolyte 120. In this case, the lithium alloy may function as a nucleation site where lithium ions are electrodeposited. For example, the lithium metal layer 125 may be dissociated into lithium ions and metal cations during the discharging process, and thus the thickness of the lithium metal layer 125 may be reduced. For example, if (e.g., when) the lithium battery 100 is completely discharged, the lithium battery 100 may include no lithium metal layer 125.

According to some embodiments, the lithium battery 100 including the herein-described electrode structure 10 may further include a protecting layer (not illustrated) provided between the anode and the polymer electrolyte.

Referring to FIG. 1, the protecting layer may be formed between the anode current collector 110 and the polymer electrolyte 120.

Referring to FIG. 2, the protecting layer may be formed between the anode current collector 110 and the polymer electrolyte 120. For example, the protecting layer (not illustrated) may be formed between the lithium metal layer 125 and the polymer electrolyte 120.

[Anode current collector]

According to some embodiments, the electrode current collector 110 included in the electrode structure 10 may be an anode current collector. For example, the electrode structure 10 may include an electrode current collector 110, which is the anode current collector, and a polymer electrolyte 120 provided on the electrode current structure 110.

According to some embodiments, the anode active material layer may be free on the anode current collector before charging and discharging. For example, the lithium metal layer may be free on the anode current collector before charging and discharging. For example, in the lithium battery in which the anode active material layer or the lithium metal layer is free on the anode current collector before charging and discharging, dendrite formation may be prevented or reduced and lifespan characteristics may be further improved.

The description of the anode current collector may be referred to in the description of the herein-described electrode current collector 110.

[Polymer electrolyte 120]

For example, the description of the polymer electrolyte 120 may be referred to in the description of the polymer electrolyte 120 included in the herein-described electrode structure 10.

According to other embodiments, the polymer electrolyte 120 may further include a non-woven fabric. The non-woven fabric may serve to support one or more selected from a lithium metal and a lithium alloy deposited during the charging process. In embodiments, the non-woven fabric may not be provided. For example, if (e.g., when) the anode current collector is a mesh type or kind, there is no need to utilize the non-woven fabric.

The non-woven fabric may have a porosity of about 10 volume% to about 90 volume%, for example, about 10 volume% to about 80 volume%, for example, about 10 volume% to about 50 volume%, or for example, about 25 volume% to about 50 volume%, and may have an average pore size of about 0.1 $\mu$m to about 10 $\mu$m, for example, about 0.01 $\mu$m to about 8 $\mu$m, or for example, about 0.1 $\mu$m to about 1.0 $\mu$m. The average pore size refers to a diameter if (e.g., when) the pore has a spherical shape, and for a pore that is non-spherical, the pore size refers to the major axis length of the pore.

According to some embodiments, the non-woven fabric may include at least one selected from among non-woven fabric selected from among cellulose, polyester (e.g., for example polyethylene terephthalate (PET)), polyetherimide, polyethylene, polypropylene, polyethylene terephthalate, polybutylene terephthalate, polyamide, polyacetal, polycarbonate, polyimide, polyetherketone, polyether sulfone, polyphenylene oxide, polyphenylene sulfide, polyethylenenaphthalene, polytetrafluoroethylene, polyvinylidene fluoride, polyvinyl chloride, polyacrylonitrile, nylon, and polyparaphenylenebenzobisoxazole.

[Anode: Lithium metal layer]

Referring to FIG. 3, the lithium battery 100 may further include a lithium metal layer 125 provided between the electrode current collector 110 and the polymer electrolyte 120. For example, the lithium metal layer 125 may include a lithium metal or a lithium alloy. For example, the lithium metal layer 125 may be a lithium electrodeposition layer.

For example, as the lithium battery 100 is charged, lithium ions included in the polymer electrolyte 120 may be electrodeposited on the electrode current collector 110 to thereby generate the lithium metal layer 125. For example, as the lithium battery 100 is charged, the lithium metal layer 125 may be generated by electrodeposition, on the electrode current collector 110, a lithium alloy formed of lithium ions included in the polymer electrolyte 120 and metal ions of the metal salt included in the polymer electrolyte 120.

For example, the lithium metal layer 125 may include a lithium alloy and a lithium metal. For example, the lithium alloy included in the lithium metal layer 125 may weaken reactivity of the lithium metal, and thus a side reaction of the lithium metal layer 125 and the polymer electrolyte 120 may be effectively inhibited. The lithium alloy included in the lithium metal layer 125 may function as a nucleation site for lithium electrodeposition, and thus the lithium-ion may be more uniformly electrodeposited. The lithium metal layer 125 has excellent or suitable electrical conductivity, and thus the lithium battery 100 including the same may have decreased internal resistance. Therefore, the lithium battery 100 including the lithium metal layer 125 may have improved charging and discharging efficiency as well as lifespan characteristics.

According to some embodiments, the lithium metal layer 125 may include, for example, plated lithium or a lithium alloy. The lithium metal layer 125 may be a lithium electrodeposition layer. For example, the lithium alloy may be an alloy of lithium ions and metal ions included in the herein-described metal salt, and the metal ions may include the herein-described metal having lithiophilicity. In this case, the lithium alloy may be an alloy of lithium and the metal having lithiophilicity. For example, if (e.g., when) the metal having lithiophilicity is silver (Ag), the lithium alloy may include a Li-Ag alloy.

According to some embodiments, the lithium metal layer 125 may include no (e.g., may exclude) carbonaceous anode active material. Therefore, the lithium metal layer 125 may be formed of a metal-based anode active material.

For example, the lithium metal layer 125 may have a thickness of about 0.1 $\mu$m to about 100 $\mu$m, about 0.1 $\mu$m to about 80 $\mu$m, about 1 $\mu$m to about 80 $\mu$m, or about 10 $\mu$m to about 80 $\mu$m, but the thickness of the lithium metal layer is not necessarily limited in these ranges and may be adjusted depending on the type or kind, capacity, and/or the like of the lithium battery required. An excessive increase in the thickness of the lithium metal layer 125 may cause structural stability of the lithium battery to be reduced and a side reaction may increase. An excessively small thickness of the lithium metal layer 125 may cause energy density of the lithium metal battery to be reduced.

[Cathode]

As shown in FIG. 2 and FIG. 3, the cathode active material layer 130 may be provided on the cathode current collector 140 to thereby form a cathode 150. For example, the cathode active material layer 130 may be provided on the electrode structure 10 including the polymer electrolyte 120, and the cathode current collector 140 may be provided on the cathode active material layer 130. For example, the cathode active material layer 130 may be provided on the polymer electrolyte 120 in the electrode structure 10, and the cathode current collector 140 may be provided on the cathode active material layer 130.

[Cathode: Cathode current collector]

Referring to FIG. 2 and FIG. 3, the cathode 150 may include the cathode current collector 140. For example, the cathode active material layer 130 may be formed on the cathode current collector 140 to thereby prepare the cathode 150.
For example, the cathode current collector 140 may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
According to some embodiments, the cathode current collector 140 may include aluminum (Al).
According to some embodiments, the cathode current collector 140 may include, for example, a base film and a metal layer provided on at least one (e.g., one side or both (e.g., opposite) sides of the base film. The base film may include, for example, a polymer. The polymer may be, for example, a thermoplastic polymer. Examples of the polymer may include polyethylene terephthalate (PET), polyethylene (PE), polypropylene (PP), polybutylene terephthalate (PBT), polyimide (PI), and/or a combination thereof. Due to inclusion of a thermoplastic polymer in the base film, the base film gets liquefied in the event of a short circuit and thus may prevent or reduce a rapid increase in electric current. The base film may be, for example, an insulator. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may be disconnected in the event of an overcurrent, thereby acting as an electrochemical fuse, and therefore may provide protection against a short circuit. According to some embodiments, a limiting current and peak current may be adjusted by adjusting the thickness of the metal layer. The metal layer may be plated or deposited on the base film. If (e.g., when) the thickness of the metal layer decreases, the limiting current and/or peak current of the cathode current collector 140 may decrease, and therefore, the lithium battery may have improved stability during a short circuit. A lead tab may be added on the metal layer for external connection. The lead tab may be welded to the metal layer or a metal layer/base film laminate by ultrasonic welding, laser welding, spot welding, and/or the like. As the base film and/or the metal layer melt during welding, the metal layer may be electrically connected to the lead tab. To further secure the welding between the metal layer and the lead tab, a metal chip may be added between the metal layer and the lead tab. The metal chip may be a flake of the same material as the metal of the metal layer. For example, the metal chip may be a metal foil, a metal mesh, and/or the like. For example, the metal chip may be an aluminum foil, a copper foil, an SUS foil, and/or the like. By welding the lead tab after placing the metal chip on the metal layer, the lead tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead tab. A metal chip and/or a lead tab may be further added to a portion of the metal layer. The base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If (e.g., when) the thickness of the base film falls within the described ranges, a reduction of the weight of the cathode current collector may be more effectively achieved. For example, the base film may have a melting point of about 100 °C to about 300 °C, about 100 °C to about 250 °C, or about 100 °C to about 200 °C. As the melting point of the base film falls within the described ranges, during the welding process of the lead tab, the base film may melt and be easily bonded to the lead tab. To improve adhesion between the base film and the metal layer, a surface treatment such as the corona treatment may be performed on the base film. The metal layer may have a thickness of, for example, about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If (e.g., when) the thickness of the metal layer falls within these ranges, stability of the electrode assembly may be secured while maintaining conductivity. The metal chip may have a thickness of, for example, about 2 $\mu$m to about 10 $\mu$m, about 2 $\mu$m to about 7 $\mu$m, or about 4 $\mu$m to about 6 $\mu$m. As the thickness of the metal chip falls within these ranges, the connection between the metal layer and the lead tab may be more easily performed. As the cathode current collector 140 has such a structure, the weight of the electrode may be reduced and as a result, energy density may be improved.

[Cathode: Cathode active material layer]

The cathode active material layer 130 may include a cathode active material, a conductive material, and a binder.

For example, at least one among a composite oxide of lithium and a metal selected from cobalt, manganese, nickel, and a combination thereof may be utilized as the cathode active material. In some embodiments, examples of the cathode active material include a compound represented by at least one selected from among: $Li_aA_{1-b}B_bD_2$ (where, $0.90 \leq a \leq 1.8$, and $0 \leq b \leq 0.5$ are satisfied); $Li_aE_{1-b}B_bO_{2-c}D_c$ (where, $0.90 \leq a \leq 1.8$, $0 \leq b \leq 0.5$, $0 \leq c \leq 0.05$ are satisfied); $LiE_{2-b}B^1_bO_{4-c}D^1_c$ (where, $0 \leq b \leq 0.5$, $0 \leq c \leq 0.05$ are satisfied); $Li_aNi_{1-b-c}Co_bB^1_cD^1_\alpha$ (where, $0.90 \leq a \leq 1.8$, $0 \leq b \leq 0.5$, $0 \leq c \leq 0.05$, $0 < \alpha \leq 2$ are satisfied); $Li_aNi_{1-b-c}Co_bB^1_cO_{2-\alpha}F^1_\alpha$ (where, $0.90 \leq a \leq 1.8$, $0 \leq b \leq 0.5$, $0 \leq c \leq 0.05$, $0 < \alpha < 2$ are satisfied); $Li_aNi_{1-b-c}Co_bB^1_cO_{2-\alpha}F^1_\alpha$ (where, $0.90 \leq a \leq 1.8$, $0 \leq b \leq 0.5$, $0 \leq c \leq 0.05$, $0 < \alpha < 2$ are satisfied); $Li_aNi_{1-b-c}Mn_bB^1_cD^1_\alpha$ (where, $0.90 \leq a \leq 1.8$, $0 \leq b \leq 0.5$, $0 \leq c \leq 0.05$, $0 < \alpha \leq 2$ are satisfied); $Li_aNi_{1-b-c}Mn_bB^1_cO_{2-\alpha}F^1_\alpha$ (where, $0.90 \leq a \leq 1.8$, $0 \leq b \leq 0.5$, $0 \leq c \leq 0.05$, $0 < \alpha < 2$ are satisfied); $Li_aNi_{1-b-c}Mn_bB^1_cO_{2-\alpha}F^1_2$ (where, $0.90 \leq a \leq 1.8$, $0 \leq b \leq 0.5$, $0 \leq c \leq 0.05$, $0 < \alpha < 2$ are satisfied); $Li_aNi_bE_cG_dO_2$ (where, $0.90 \leq a \leq 1.8$, $0 \leq b \leq 0.9$, $0 \leq c \leq 0.5$, $0.001 \leq d \leq 0.1$ are satisfied); $Li_aNi_bCo_cMn_dGeO_2$ (where, $0.90 \leq a \leq 1.8$, $0 \leq b \leq 0.9$, $0 \leq c \leq 0.5$, $0 \leq d \leq 0.5$, $0.001 \leq e \leq 0.1$ are satisfied); $Li_aNiG_bO_2$ (where, $0.90 \leq a \leq 1.8$, $0.001 \leq b \leq 0.1$ are satisfied); $Li_aCoG_bO_2$ (where, $0.90 \leq a \leq 1.8$, $0.001 \leq b \leq 0.1$ are satisfied); $Li_aMnG_bO_2$ (where, $0.90 \leq a \leq 1.8$, $0.001 \leq b \leq 0.1$ are satisfied); $Li_aMn_2G_bO_4$ (where, $0.90 \leq a \leq 1.8$, $0.001 \leq b \leq 0.1$ are satisfied); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the preceding formulas, A may be Ni, Co, Mn, or a combination thereof; $B^1$ may be Al, Ni, Co, Mn, Cr, Fe, Mg, Sr, V, Ga, Si, W, Mo, Cu, Zn, Ti, boron (B), a rare earth element, or a combination thereof; $D^1$ may be O, F, S, P, or a combination thereof; E may be Co, Mn, or a combination thereof; $F^1$ may be F, S, P, Cl, Br, or a combination thereof; G may be Al, Cr, Mn, Fe, Mg, La, Ce, Sr, V, or a combination thereof; Q may be Ti, Mo, Mn, a combination thereof; I may be Cr, V, Fe, Sc, Y, or a combination thereof; and J may be V, Cr, Mn, Co, Ni, Cu, or a combination thereof.

For example, the cathode active material may include a lithium transition metal oxide containing nickel and other transition metals. In the lithium transition metal oxide containing nickel and other transition metals, an amount of nickel may be 60 mol% or more, for example. 75 mol% or more, for example, 80 mol% or more, for example, 85 mol% or more, for example, 90 mol% or more with respect to the total number of moles of the transition metal.

For example, the lithium transition metal oxide may be a compound represented by Formula 3.

$$\text{Formula 3} \qquad Li_aNi_xCo_yM_zO_{2-b}A_b$$

In Formula 3, $1.0 \leq a \leq 1.2$, $0 \leq b \leq 0.2$, $0.6 \leq x < 1$, $0 \leq y \leq 0.3$, $0 < z \leq 0.3$, $x+y+z=1$, M is at least one selected from the group consisting of manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B).

A is F, S, Cl, Br, or a combination thereof.

In Formula 3, for example $0.7 \leq x < 1$, $0 < y \leq 0.3$, $0 < z \leq 0.3$; $0.8 \leq x < 1$, $0 < y \leq 0.3$, $0 < z \leq 0.3$; $0.8 \leq x < 1$, $0 < y \leq 0.2$, $0 < z \leq 0.2$; $0.83 \leq x < 0.97$, $0 < y \leq 0.15$, $0 < z \leq 0.15$; or $0.85 \leq x < 0.95$, $0 < y \leq 0.1$, $0 < z \leq 0.1$.

For example, the lithium transition metal oxide may be at least one selected from among compounds represented by Formula 3-1 and Formula 3-2.

$$\text{Formula 3-1} \qquad LiNi_xCo_yMn_zO_2$$

where, in Formula 3-1, $0.6 \leq x \leq 0.95$, $0 < y \leq 0.2$, $0 < z \leq 0.1$. For example, $0.7 \leq x \leq 0.95$, $0 < y \leq 0.3$, $0 < z \leq 0.3$,

$$\text{Formula 3-2} \qquad LiNi_xCo_yAl_zO_2$$

where, in Formula 3-2, $0.6 \leq x \leq 0.95$, $0 < y \leq 0.2$, $0 < z \leq 0.1$. For example, $0.7 \leq x \leq 0.95$, $0 < y \leq 0.3$, $0 < z \leq 0.3$. For example, $0.8 \leq x \leq 0.95$, $0 < y \leq 0.3$, $0 < z \leq 0.3$. For example, $0.82 \leq x \leq 0.95$, $0 < y \leq 0.15$, $0 < z \leq 0.15$. For example, $0.85 \leq x \leq 0.95$, $0 < y \leq 0.1$, $0 < z \leq 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, and/or $LiNi_{0.88}Co_{0.1}Al_{0.02}O2$.

For example, materials having a coating layer on the surface of the lithium transition metal oxide may also be utilized, or a mixture of the lithium transition metal oxide and the lithium transition metal oxide having a coating layer may also be utilized.

For example, the coating layer may include an oxide of a coating element, a hydroxide of a coating element, an oxyhydroxide of a coating element, an oxycarbonate of a coating element, or a hydroxycarbonate of a coating element.

For example, the compound providing the coating layer may be amorphous or crystalline. The coating element included in the coating layer may be Mg, Al, Co, K, Na, Ca, Si, Ti, V, Sn, Ge, Ga, B, As, Zr, or a mixture thereof. The coating layer formation process may be performed by any coating method (for example, spray coating, dipping, and/or the like) that does not adversely affect the properties of the cathode active material utilizing the coating elements on the lithium transition metal oxide, and a detailed description thereof will not be provided because these methods are well suitable to those skilled in the art.

Examples of conductive material may include carbon black, graphite fine particles and/or the like, but are not limited thereto, and any conductive material available in the art may be utilized.

As the binder, a vinylidene fluoride/hexafluoropropylene copolymer, polyvinylidene fluoride (PVDF), polyacrylonitrile, polymethyl methacrylate, polytetrafluoroethylene, and a mixture thereof, styrene butadiene rubber-based polymer, and/or the like may be utilized. However, embodiments are not limited thereto, and any material available as the binder in the art may be utilized.

[Separator]

The lithium battery according to embodiments may further include a separator.

According to some embodiments, examples of the separator may include polyethylene, polypropylene, polyvinylidene fluoride, or multilayer films thereof, and may include a polyethylene/polypropylene bi-layer separator, polyethylene/polypropylene/polyethylene tri-layer separator, and a polypropylene/polyethylene/polypropylene tri-layer separator.

According to some embodiments, a battery case including the lithium battery may have a cylindrical shape, a polygonal shape, a thin-film shape, and/or the like. For example, the lithium battery may be a large-sized thin-film shaped battery. The lithium battery may be a lithium-ion battery.

According to some embodiments, the lithium battery 100 may include, for example. a lithium-air battery, a lithium-sulfur battery, and/or the like.

According to some embodiments, the lithium battery 100 may have excellent or suitable lifespan characteristics and high rate characteristics and thus may be utilized in an electric vehicle (EV). For example, the lithium battery 100 may be utilized for hybrid vehicles such as plug-in hybrid electric vehicles (PHEVs). The lithium battery may be utilized in any field that requires a large amount of energy storage. For example, the lithium battery may be utilized in an electric bicycle, a power tool, and/or the like.

If (e.g., when) a plurality of the lithium battery 100 according to some embodiments are stacked, a gel type or kind electrolyte may be provided between the cathode and the liquid impermeable ion conductive composite film. The gel type or kind electrolyte may include, for example, a VDF-HFP copolymer, a lithium salt, and a solvent.

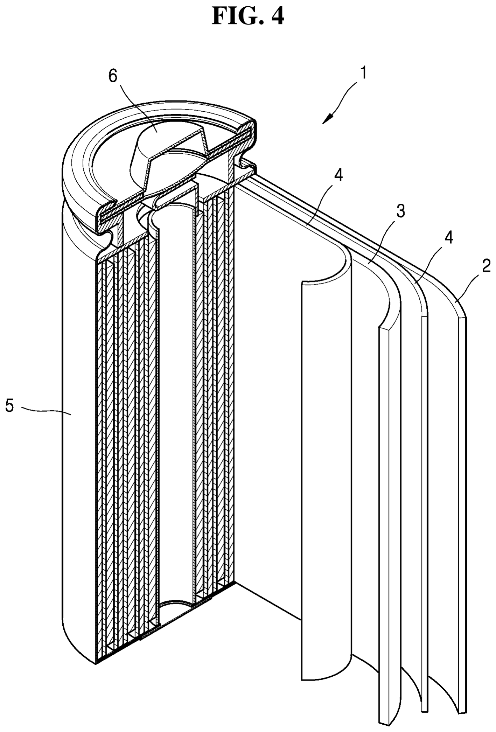

Referring to FIG. 4, a lithium battery 1 according to embodiments may include a cathode 3, the herein-described anode 2, and a separator 4. The cathode 3, the anode 2, and the separator 4 are wound or folded to form a battery structure 7. The formed battery structure 7 may be accommodated in a battery case 5. A polymer electrolyte may be injected into the battery case 5 and sealed with a cap assembly 6 to complete the manufacture of the lithium battery 1. The battery case 5 may have a cylindrical shape, but is not necessarily limited thereto and may have, for example, a polygonal shape, a thin-film shape, and/or the like.

For example, a polymer electrolyte including cathode 3, anode 2, and separator 4 is wound or folded to form a battery structure 7. The formed battery structure 7 may be accommodated in a battery case 5. A liquid electrolyte may be injected into the battery case 5 and sealed with a cap assembly 6 to complete the manufacture of the lithium battery 1. The battery case 5 may have a cylindrical shape, but is not necessarily limited thereto and may have a polygonal shape, a thin-film shape, and/or the like.

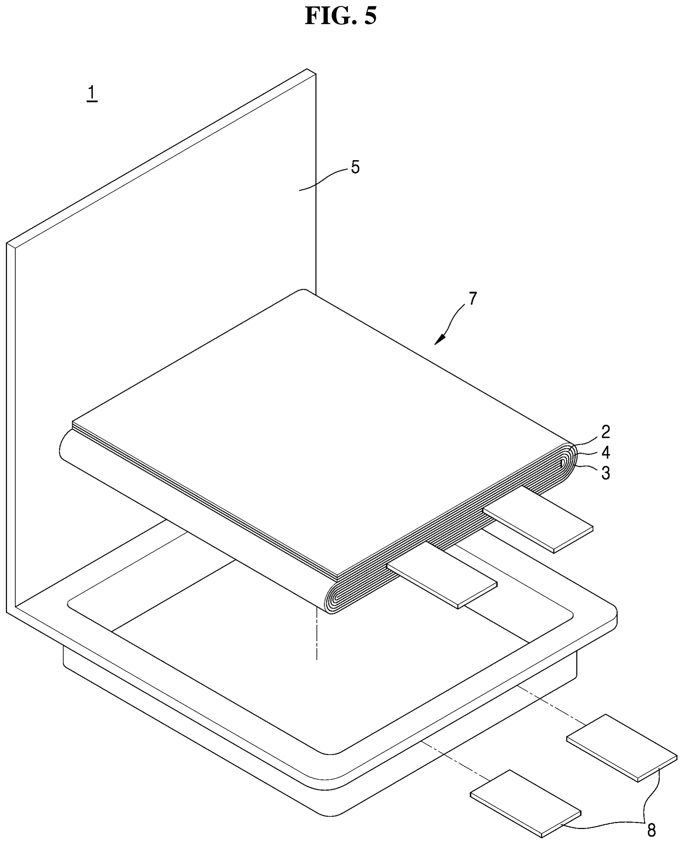

Referring to FIG. 5, a lithium battery 1 according to embodiments may include a cathode 3, the herein-described anode 2, and a separator 4. The separator 4 may be provided between the cathode 3 and the anode 2, and the cathode 3, the anode 2, and the separator 4 may be wound or folded to form a battery structure 7. The formed battery structure 7 may be accommodated in a battery case 5. An electrode tab 8, acting as an electrical path for guiding an electric current generated in the battery structure 7 to the outside, may be included. The herein-described electrolyte may be injected into the battery case 5, which may be sealed to complete the manufacture of the lithium battery 1.

For example, a polymer electrolyte including the separator 4 may be provided between the cathode 3 and the anode 2, and then the cathode 3, the anode 2, and the separator 4 may be wound or folded to thereby form a battery structure 7. The formed battery structure 7 may be accommodated in a battery case 5. An electrode tab 8, acting as an electrical path for inducing an electric current generated in the battery structure 7 to the outside, may be included. A liquid electrolyte may be injected into the battery case 5 and sealed to complete the manufacture of the lithium battery 1. The battery case 5 may have a polygonal shape, but is not necessarily limited thereto, for example, may also have a cylindrical shape, a thin-film shape, and/or the like.

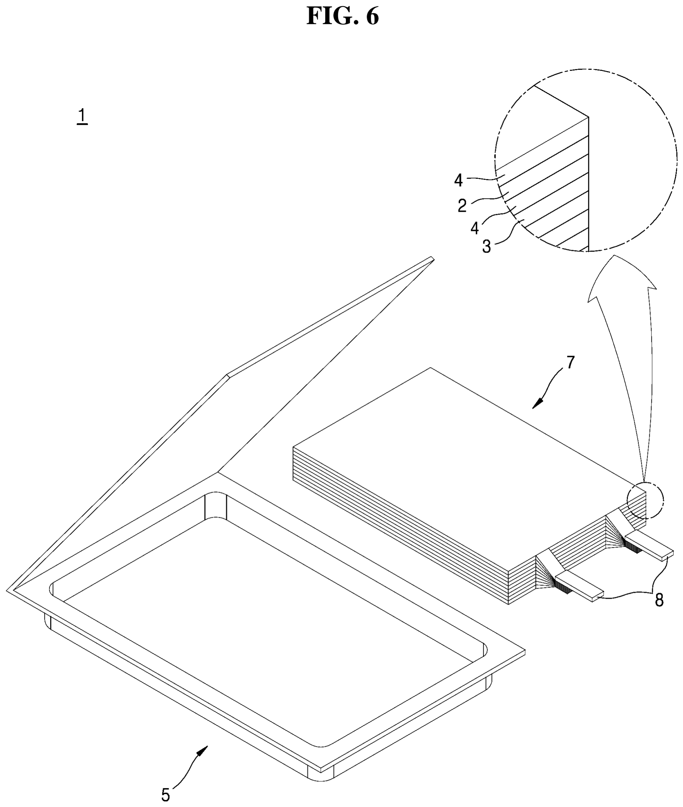

Referring to FIG. 6, the lithium battery 1 according to embodiments may include a cathode 3, an anode 2, and a separator 4. The herein-described polymer electrolyte including the separator 4 may be provided between the cathode 3 and the anode 2 to thereby form a battery structure. The battery structure 7 may be stacked in a bi-cell structure and then accommodated into the battery case 5. An electrode tab 8, acting as an electrical path for inducing an electric current generated in the battery structure 7 to the outside, may be included. A liquid electrolyte may be injected into the battery case 5 and sealed to complete the manufacture of the lithium battery 1. The battery case 5 may have a polygonal shape but is not necessarily limited thereto, and for example, may also have a cylindrical shape, a thin-film shape, and/or the like.

A pouch-type or kind lithium battery corresponds to lithium batteries in FIG. 4 to FIG. 6, each of which a pouch-type or kind battery case is utilized as a battery case. The pouch-type or kind lithium battery includes at least one battery structure. The polymer electrolyte may be provided between the cathode and the anode to thereby form a battery structure. The battery structure may be stacked in a bi-cell structure and may be impregnated in a liquid electrolyte solution, which may be then sealed to complete the manufacture of the pouch-type or kind lithium battery. For example, although not illustrated in the drawings, the polymer electrolyte including the herein-described cathode, anode, and separator may be simply stacked and may be received in a pouch in the form of an electrode assembly, or may be wound or folded into a jelly roll-type or kind electrode assembly and then may be accommodated in a pouch. Thereafter, the liquid electrolyte may be injected into the pouch, which may be then sealed to complete the manufacture of the lithium battery.

The lithium battery may have excellent or suitable lifespan characteristics and high rate characteristics, which makes it suitable for utilize in, for example, electric vehicles (EVs). For example, the lithium battery may be utilized in hybrid vehicles, such as plug-in hybrid electric vehicles (PHEVs) and/or the like. Also, the lithium battery may be utilized in any field that requires a large amount of energy storage. For example, the lithium battery may be utilized in an electric bicycle, a power tool, and/or the like.

The lithium batteries may be stacked in plurality to form a battery module, and a plurality of battery modules may form a battery pack. Such a battery pack may be utilized in all types (kinds) of devices that require high capacity and high output. For example, the battery pack may be utilized in laptop computers, smartphones, electric vehicles, and/or the like The battery module may include, for example, a plurality of batteries and a frame holding the batteries. The battery pack may include, for example, a plurality of battery modules and a bus bar connecting the same. The battery module and/or the battery pack may further include a cooling device. The plurality of battery packs may be adjusted by a battery management system. The battery management system may include a battery pack and a battery control device connected to the battery pack.

The present disclosure will be described in more detail through Examples and Comparative Examples hereafter. However, Examples are provided to exemplify the present disclosure, and the scope of the present disclosure is not limited thereto.

Preparation Example 1: Manufacture of electrode structure

A nickel current collector was prepared. 0.625 gram (g) of poly(ethylene glycol) diacrylate (PEGDA), 1.125 g of polyurethane, 1.17 g of lithium bis(trifluoromethanesulfonyl) imide (LiTFSI), 0.75 g of silver nitrate ($AgNO_3$), and 0.002 g of t-amyl peroxide, which is a thermal initiator, were dissolved in 9.0 g of dimethylformamide (DMF) to prepare a composition for providing a polymer electrolyte. The composition for providing the polymer electrolyte was cast on the nickel current collector utilizing a doctor blade. Thereafter, the obtained polymer electrolyte (e.g., the polymer electrolyte layer) was cross-linked and dried in a vacuum oven at 110 °C for 6 hours or more to prepare an electrode structure.

Preparation Examples 2 to 5, and Comparative Preparation Examples 1 and 2

A polymer electrolyte was prepared in substantially the same manner as in Example 1, except that the type or kind of electrode current collector and the type or kind and amount of metal salt were changed as shown in Table 1.

Table 1

| Classification | Type of electrode current collector | Type of metal salt | Amount of metal salt |
|---|---|---|---|
| Preparation Example 1 | Nickel metal | $AgNO_3$ | 0.75 g |
| Preparation Example 2 | Nickel-coated copper metal on whole surface | $AgNO_3$ | 0.75 g |
| Preparation Example 3 | Chromium metal | $AgNO_3$ | 0.75 g |
| Preparation Example 4 | Nickel-coated copper metal on whole surface | $Mg(NO_3)_2$ | 0.75 g |
| Preparation Example 5 | Nickel-coated copper metal on whole surface | $AgNO_3$ | 0.5 g |

(continued)

| Classification | Type of electrode current collector | Type of metal salt | Amount of metal salt |
|---|---|---|---|
| Comparative Preparation Example 1 | Copper metal | AgNO$_3$ | 0.75 g |
| Comparative Preparation Example 2 | Nickel-coated copper metal on whole surface | - | - |

Evaluation Example 1: Evaluation of Conversion

$^1$H-NMR was measured for the polymer electrolytes and the compositions for providing a polymer electrolyte with a 600 megahertz (MHz) spectrometer, and a method of manufacturing a sample for NMR measurement is as follows. 0.03 g of the composition for providing a polymer electrolyte and 0.0004 g of the reference material (p-xylene) were added and dissolved in 1 milliliter (mL) of NMR solvent (dimethyl sulfoxide-d6 (DMSO-d6)). The polymer electrolytes prepared according to Preparation Examples 1 to 5 and Comparative Preparation Examples 1 and 2 were punched in a circular shape having a diameter of 16 millimeter (mm) and put in 1 mL of NMR solvent (DMSO-d6), and 0.0004 g of reference material (p-xylene) was added and dissolved.

Among the $^1$H-NMR measurement results, the area of hydrogen (e.g., a peak having a chemical shift value of 6.3 parts per million (ppm), B peak having a chemical shift value of 6.2 ppm, and C peak having a value of 5.9 ppm), corresponding to the acrylate group of PEGDA, was calculated with respect to 1000 parts of the area of p-Xylene, (e.g., the reference material described herein). The calculated results were listed in Table 2. Conversion was calculated according to Equation 1, and the calculated values were listed in Table 2.

Conversion rate (%) = [1-1/3((A peak area of polymer electrolyte/A peak area of composition for providing polymer electrolyte) + (B peak area of polymer electrolyte/B peak area of composition for providing polymer electrolyte) + (C peak area of polymer electrolyte/C peak area of composition for providing polymer electrolyte)] $\times$ 100          Equation 1

Table 2

| Classification | A peak area | B peak area | C peak area | Conversion (%) |
|---|---|---|---|---|
| Composition for providing polymer electrolyte | 143.6 | 132.0 | 148.4 | - |
| Preparation Example 1 | 2.8 | 3.0 | 2.8 | 98 |
| Preparation Example 2 | 1.1 | 0.2 | 0.7 | 99.5 |
| Preparation Example 3 | 6.1 | 5.9 | 6.2 | 95.7 |
| Preparation Example 4 | 4.3 | 3.1 | 1.8 | 98.1 |
| Preparation Example 5 | 1.1 | 0.1 | 0.7 | 99.6 |
| Comparative Preparation Example 1 | 62.2 | 63.4 | 64.1 | 55.2 |
| Comparative Preparation Example 2 | 58.7 | 59.2 | 67.3 | 56.3 |

Referring to Table 2, it may be confirmed that the polymer electrolytes according to Preparation Examples 1 to 5, when compared to Comparative Preparation Example 1, have excellent or suitable conversion. Based on these results, it can be confirmed that the polymer electrolytes prepared according to Preparation Examples 1 to 5 participate in the polymerization reaction without any unreacted polymer.

Example 1: Manufacture of lithium battery pouch cell

LiNi$_{0.6}$Co$_{0.2}$Al$_{0.2}$O$_2$, a conductive material (Super-P; Timcal Ltd.), a binder, and N-methylpyrrolidone were mixed to obtain a cathode composition. In the cathode composition, a mixed weight ratio of LiNi$_{0.6}$Co$_{0.2}$Al$_{0.2}$O$_2$, the conductive material, and the binder was 97.5:1.5:1.

The cathode composition was applied onto the aluminum foil (thickness: about 15 $\mu$m), and dried at about 110 °C to prepare a cathode.

The cathode obtained according to the described processes, a polyolefin-based separator, and a liquid electrolyte were stacked to be adjacent to the polymer electrolyte among (e.g., included in) the electrode structure according to Preparation Example 1 to prepare a lithium battery (pouch cell).

Examples 2 to 5 and Comparative Examples 1 and 2: Manufacture of lithium battery pouch cell

A lithium battery was manufactured in substantially the same manner as in Example 1, except that the type or kind of polymer electrolyte utilized was changed as shown in Table 3.

Evaluation Example 2: Charge/discharge Characteristics

The lithium batteries (coin cells) manufactured according to Examples 1 to 5, and Comparative Examples 1 to 2 were each charged at a constant current of 0.1 C rate at 45° C until the voltage reached 4.30 V (vs. Li) and then the charging was cut off at a current of 0.05 C rate while maintaining 4.30 V in a constant voltage mode. Subsequently, each battery was discharged at a constant current of 0.1 C rate until the battery voltage reached 3.6 V (vs. Li) during discharge (formation cycle, 1st cycle). Another charging and discharging process was performed 2 times to complete a formation process.

The lithium battery after the formation cycle was charged at 45 °C with a constant current of 0.2 C in a voltage range of about 3.6 V to about 4.3 V compared to lithium metal, and then the charging was cut off at a current of 0.05 C rate while maintaining 4.30 V in a constant voltage mode. Subsequently, a constant current discharge was performed at 0.5 C until a voltage reached a cutoff voltage of 3.6 V. The herein-described charging and discharging process was repeatedly performed a total of 200 times.

Throughout the charging and discharging cycles described, a rest period of 5 minutes was provided after each charging and discharging cycle. Herein, a capacity retention ratio at the $200^{th}$ cycle is represented by Equation 2.

Equation 2

$$\text{Capacity retention ratio (\%)} = \left[\frac{\text{discharge capacity at } 200^{th} \text{ cycle}}{\text{discharge capacity at } 1^{st} \text{ cycle}}\right]$$

x 100

The capacity retention ratio and discharge capacity at $200^{th}$ cycle were measured and the values were listed in Table 3.

Table 3

| Classification | Polymer electrolyte | High temperature evaluation (45 °C) | |
| --- | --- | --- | --- |
| | | Capacity (mAh) | Capacity Retention rate (%) |
| Example 1 | Preparation Example 1 | 15.3 | 75 |
| Example 2 | Preparation Example 2 | 16.9 | 77 |
| Example 3 | Preparation Example 3 | 15.1 | 72 |
| Example 4 | Preparation Example 4 | 14.3 | 65 |
| Example 5 | Preparation Example 5 | 14.7 | 67 |
| Comparative Example 1 | Comparative Preparation Example 1 | 11.3 | 55 |
| Comparative Example 2 | Comparative Preparation Example 2 | 10.5 | 51 |

Referring to Table 3, Examples 1 to 5 include electrode structures according to Preparation Examples 1 to 5, respectively, and compared to Comparative Examples 1 to 2, which include electrode structures according to Comparative Preparation Examples 1 and 2, respectively, capacity characteristics and capacity retention rate characteristics at 45 °C were excellent or suitable.

Hitherto, embodiments have been described with reference to the drawings and Examples, and it is understood that the present disclosure should not be limited to these embodiments, but one or more suitable changes, modifications, and other equivalent embodiments can be made by one ordinary skilled in the art. Therefore, the scope of protection of the present disclosure should be defined by the following claims and equivalents thereof.

**List of Reference Numerals for Major Elements**

100 lithium battery
110 electrode current collector 120 polymer electrolyte
130 cathode active material layer 140 cathode current collector
150 cathode 125 lithium metal layer

**Claims**

1. An electrode structure, the electrode structure comprising:

   an electrode current collector; and
   a polymer electrolyte on the electrode current collector, wherein
   the electrode current collector comprises nickel (Ni), chromium (Cr), or zinc (Zn),
   the polymer electrolyte comprises a cross-linked structure and a metal salt, the cross-linked structure comprising a repeating unit (A) comprising a first polymer and a repeating unit (B) comprising a second polymer,
   the first polymer comprises a polymer comprising a polar functional group, and
   the second polymer comprises a polyurethane-based polymer.

2. The electrode structure as claimed in claim 1, wherein
   a surface of the electrode current collector comprises nickel (Ni), chromium (Cr) or zinc (Zn) and comprises no copper (Cu).

3. The electrode structure as claimed in claim 1, wherein

   the electrode current collector comprises a base film and a metal layer on at least one side of the base film,
   the base film comprises a metal or a polymer,
   the metal in the base film comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof,
   the polymer in the base film comprises polyethylene terephthalate (PET), polyethylene (PE), polypropylene (PP), polybutylene terephthalate (PBT), polyimide (PI), or a combination thereof, and
   the metal layer comprises nickel (Ni), chromium (Cr) or zinc (Zn), and
   wherein the electrode current collector comprises nickel (Ni), chromium (Cr) or zinc (Zn).

4. The electrode structure as claimed in claim 1, wherein
   the metal salt comprises gold (Au), silver (Ag), platinum (Pt), zinc (Zn), silicon (Si), magnesium (Mg), or a combination thereof.

5. The electrode structure as claimed in claim 1, wherein
   the metal salt comprises $AgNO_3$, $AuCl_3$, $Mg(NO_3)_2$, $Zn(NO_3)_2$, or a combination thereof.

6. The electrode structure as claimed in claim 1, wherein
   an amount of the metal salt is about 1 part by weight to about 50 parts by weight with respect to 100 parts by weight of the cross-linked structure.

7. The electrode structure as claimed in claim 1, wherein
   the polymer of the first polymer comprises polyethylene oxide, polyacrylonitrile, a polyvinylidene fluoride-hexafluoropropylene copolymer, polyethylene glycol diacrylate, polyethylene glycol methyl ether acrylate, polymethyl methacrylate, polyethyl methacrylate, polycaprolactone, polyethylene carbonate, polypropylene carbonate, or a combination thereof.

8. The electrode structure as claimed in claim 1, wherein
   the first polymer further comprises at least one terminal double bond.

9. The electrode structure as claimed in claim 1, wherein

the first polymer comprises polyethylene oxide, polyacrylonitrile, a polyvinylidene fluoride-hexafluoropropylene copolymer, polyethylene glycol diacrylate, polyethylene glycol methyl acrylate, or a combination thereof.

10. The electrode structure as claimed in claim 1, wherein
the second polymer comprises polyurethane, urethane acrylate, urethane methacrylate, perfluoropolyether urethane acrylate, perfluoropolyether urethane methacrylate, or a combination thereof.

11. The electrode structure as claimed in claim 1, wherein

an amount of the repeating unit (A) derived from the first polymer is about 50 wt% to about 90 wt% with respect to a total weight of the cross-linked structure, and
an amount of the repeating unit (B) derived from the second polymer is about 10 wt% to about 50 wt% with respect to the total weight of the cross-linked structure.

12. The electrode structure as claimed in claim 1, wherein
the polymer electrolyte further comprises a lithium salt.

13. The electrode structure as claimed in claim 12, wherein
the lithium salt comprises $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ wherein, x and y are each independently 1 to 20, LiCl, LiI, or a mixture thereof.

14. The polymer electrolyte as claimed in claim 1, wherein
the polymer electrolyte further comprises an organic solvent or an ionic liquid.

15. The electrode structure as claimed in claim 14, wherein

the organic solvent comprises propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyl dioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof,
the ionic liquid comprises a cation and an anion,
the cation comprises at least one selected from among ammonium-based cation, pyrrolidinium-based cation, pyridinium-based cation, pyrimidinium-based cation, imidazolium-based cation, piperidinium-based cation, pyrazolium-based cation, oxazolium-based cation, pyridazinium-based cation, phosphonium-based cation, sulfonium-based cation, triazolium-based cation, and a mixture thereof, and
the anion comprises at least one selected from among $BF_4^-$, $PF_6^-$, $AsF_6^-$, $SbF_6^-$, $AlCl_4^-$, $H_SO_4^-$, $ClO_4^-$, $CH_3SO_3^-$, $CF_3CO_2^-$, Cl$^-$, Br$^-$, I$^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$.

16. The electrode structure as claimed in claim 1, wherein
the polymer electrolyte has a thickness of about 4 micrometer (μm) to about 20 μm.

17. A method of preparing an electrolyte structure, the method comprising:

preparing an electrode current collector;
preparing a composition, the composition is for providing a polymer electrolyte and comprises a first polymer, a second polymer, a metal salt, and an initiator;
applying the composition onto the electrode current collector; and
providing the polymer electrolyte on the electrode current collector, the electrode current collector is coated with the composition,
wherein, the electrode current collector comprises nickel (Ni), chromium (Cr) or Zinc(Zn)
the first polymer comprises a polymer containing a polar functional group, and
the second polymer comprises a polyurethane-based polymer.

18. The method as claimed in claim 17, wherein
the composition is heated for about 1 hour to about 15 hours at about 60 °C to about 180 °C, and is vacuum dried to form the polymer electrolyte on the electrode current collector.

**19.** The method as claimed in claim 17, wherein

the initiator comprises a thermal initiator, and
the thermal initiator comprises at least one selected from the group consisting of a persulfate-based initiator, an azo-based initiator, a peroxide-based initiator, and ascorbic acid.

**20.** A lithium battery, the lithium battery comprising the electrode structure according to claims 1 to 16.

**FIG. 1**

# FIG. 2

# FIG. 3

100

140 ⎫
130 ⎬ 150
120
125 ⎫
110 ⎬ 10

# FIG. 4

# FIG. 5

# FIG. 6

1

4
2
4
3

7

8

5

## INTERNATIONAL SEARCH REPORT

| International application No. |
|---|
| **PCT/KR2024/003732** |

**A. CLASSIFICATION OF SUBJECT MATTER**

**H01M 10/058**(2010.01)i; **H01M 10/0565**(2010.01)i; **H01M 4/13**(2010.01)i; **H01M 4/62**(2006.01)i; **H01M 4/66**(2006.01)i; **H01M 10/052**(2010.01)i; **H01M 10/42**(2006.01)i

According to International Patent Classification (IPC) or to both national classification and IPC

**B. FIELDS SEARCHED**

Minimum documentation searched (classification system followed by classification symbols)

H01M 10/058(2010.01); H01M 10/0525(2010.01); H01M 10/0565(2010.01); H01M 10/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집전체(collector), 전해질(electrolyte), 고분자(polymer), 극성 작용기(polar functional group), 폴리우레탄(polyurethane)

**C. DOCUMENTS CONSIDERED TO BE RELEVANT**

| Category* | Citation of document, with indication, where appropriate, of the relevant passages | Relevant to claim No. |
|---|---|---|
| A | KR 10-2004-0092189 A (ELECTRONICS AND TELECOMMUNICATIONS RESEARCH INSTITUTE) 03 November 2004 (2004-11-03) See paragraphs [0022]-[0029]. | 1-20 |
| A | KR 10-2012-0006730 A (LG INNOTEK CO., LTD.) 19 January 2012 (2012-01-19) See paragraphs [0011]-[0017]. | 1-20 |
| A | KR 10-2002-0083117 A (SAMSUNG SDI CO., LTD.) 01 November 2002 (2002-11-01) See claims 1-17. | 1-20 |
| A | KR 10-2000-0045100 A (KO, Jang Myoun et al.) 15 July 2000 (2000-07-15) See claims 1-5. | 1-20 |
| A | KR 10-2004-0092188 A (ELECTRONICS AND TELECOMMUNICATIONS RESEARCH INSTITUTE) 03 November 2004 (2004-11-03) See claims 1-14. | 1-20 |

☐ Further documents are listed in the continuation of Box C.  ☑ See patent family annex.

| | |
|---|---|
| *   Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 June 2024** | **21 June 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/003732**

| Patent document cited in search report | | | Publication date (day/month/year) | Patent family member(s) | | | Publication date (day/month/year) |
|---|---|---|---|---|---|---|---|
| KR | 10-2004-0092189 | A | 03 November 2004 | AT | 361553 | T | 15 May 2007 |
| | | | | CN | 1306644 | C | 21 March 2007 |
| | | | | CN | 1610170 | A | 27 April 2005 |
| | | | | DE | 602005001023 | T2 | 24 January 2008 |
| | | | | EP | 1598896 | A1 | 23 November 2005 |
| | | | | EP | 1598896 | B1 | 02 May 2007 |
| | | | | JP | 2004-327423 | A | 18 November 2004 |
| | | | | JP | 2005-310795 | A | 04 November 2005 |
| | | | | JP | 4249607 | B2 | 02 April 2009 |
| | | | | JP | 4368823 | B2 | 18 November 2009 |
| | | | | KR | 10-0496642 | B1 | 20 June 2005 |
| | | | | KR | 10-0609693 | B1 | 08 August 2006 |
| | | | | KR | 10-2005-0103068 | A | 27 October 2005 |
| | | | | US | 2004-0214089 | A1 | 28 October 2004 |
| | | | | US | 2005-0196677 | A1 | 08 September 2005 |
| | | | | US | 7211352 | B2 | 01 May 2007 |
| | | | | US | 7399556 | B2 | 15 July 2008 |
| KR | 10-2012-0006730 | A | 19 January 2012 | None | | | |
| KR | 10-2002-0083117 | A | 01 November 2002 | CN | 1186391 | C | 26 January 2005 |
| | | | | CN | 1382746 | A | 04 December 2002 |
| | | | | JP | 2003-017128 | A | 17 January 2003 |
| | | | | JP | 3571032 | B2 | 29 September 2004 |
| | | | | KR | 10-0407485 | B1 | 28 November 2003 |
| | | | | US | 2002-0160269 | A1 | 31 October 2002 |
| | | | | US | 6949318 | B2 | 27 September 2005 |
| KR | 10-2000-0045100 | A | 15 July 2000 | None | | | |
| KR | 10-2004-0092188 | A | 03 November 2004 | CN | 1610169 | A | 27 April 2005 |
| | | | | JP | 2004-327422 | A | 18 November 2004 |
| | | | | KR | 10-0496641 | B1 | 20 June 2005 |
| | | | | US | 2004-0214088 | A1 | 28 October 2004 |

Form PCT/ISA/210 (patent family annex) (July 2022)